# EUROPEAN PATENT APPLICATION

(11) **EP 2 958 308 A1**
(43) Date of publication of application: **23.12.2015**
(21) Application number: 14305924.4
(22) Date of filing: 17.06.2014
(51) Int. Cl.: H04N 1/00, H04N 1/21, H04N 5/232

(54) **Method for taking a self-portrait**

(71) Applicant: Thomson Licensing, 92130 Issy-les-Moulineaux (FR)
(72) Inventor: Hellier, Pierre, 35576 Cesson-Sévigné (FR); Demoulin, Vincent, 35576 Cesson-Sévigné (FR); Oisel, Lionel, 35576 Cesson-Sévigné (FR)
(74) Representative: Huchet, Anne

(57) **Abstract**

A method of taking a self portrait image using a mobile device having a front camera and a back camera includes capturing a self portrait image using the low resolution front camera of the mobile device as a reference image. A new image is then acquired using the high resolution back camera of the mobile device. The two images are compared for framing accuracy and the mobile device provides audio instructions to a user to adjust the position of the mobile device for more accurate framing. Another image using the high resolution back camera is acquired to more closely frame the high resolution image with that of the low resolution reference image.

## Description

### FIELD

The present invention relates to a mechanism for taking a self-portrait with a camera. Specifically, the invention relates to a mechanism to use both a front and back camera of a device to frame a self-portrait.

### BACKGROUND

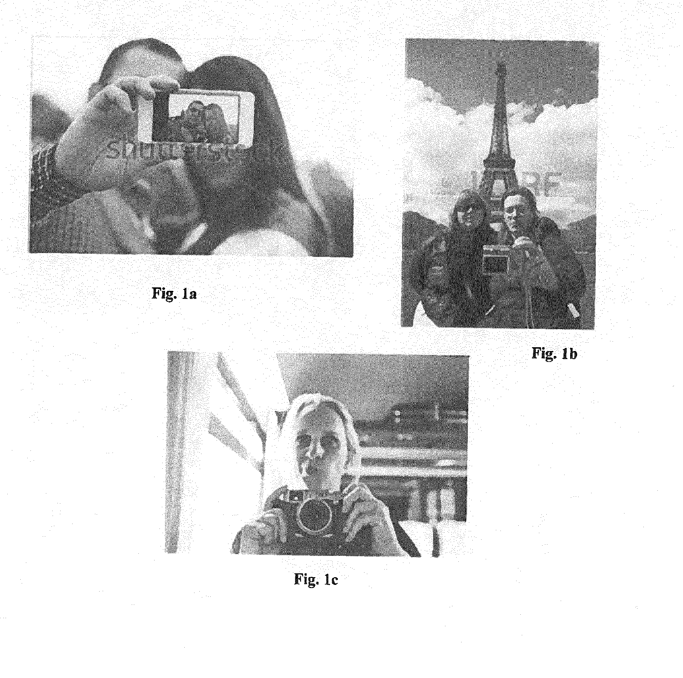

With the blossom of mobile devices, people tend now to make self-portraits (self-picture, also known as a "selfie"), capturing themselves in different places and posting these pictures to their favorite social network. Figure 1 presents some examples of such self-portraits. In the example of Figure 1a and 1b, it is obvious that handling the camera with the main lens pointed towards the camera operator while pressing on the shutter-button is a challenge. One challenge is that the operator of the camera cannot see the display screen on the back of the camera to check the framing of the picture. Figure 1b further illustrates that the framing is important. Here, framing is the relative position of faces of the operators with respect to the background. In the instance of Figure 1b, the background is the Eiffel tower. The Figure 1c example demonstrates that using a mirror is another option for a self portrait image capture.

Mobile phones are now commonly equipped with two cameras. A main or back camera and a secondary, user facing front camera. A main camera, referred to as back camera in the following description, has the point of the user when she is looking at her camera screen. In other words, the main or back camera faces outward; that is away from the user of a mobile phone. The main or back camera lens is located on the back side of a mobile phone; opposite from the main viewing screen. A main viewing screen is on the user side of most mobile phones. The main viewing screen normally shows the view of the main or back camera. This main or back camera is the classical camera for smartphones and its resolution is rapidly improving. For instance, the iPhone™ 5 has an 8-megapixel iSight™ camera.

A secondary or user facing front camera, referred to as the front camera in the following description, can be used for visual conferencing (e.g., Facetime™). This camera can be of lower spatial resolution than the main or back camera. For instance, the iPhone™ 5 front camera is a 1.2 megapixel resolution camera.

The use of a mobile phone to take a self portrait can be problematic. The user would like to use the main or back camera to take a picture. Unfortunately, the user must be skilled to acquire the picture since the shot button can be unseen. This is especially true if the button to be depressed is a soft button displayed on the user viewing screen. The LG™ G2 smartphone proposes now a button on the user side of the phone enabling the control of the main or back camera. Despite this new functionality, it is still difficult to frame the picture as desired since the user has no feedback as to control the framing of the picture. That can be especially important, for instance, if a couple taking a self-portrait with the Eiffel tower as a background, cannot properly position the mobile phone main or back camera to capture the Eiffel Tower in their self portrait. Consequently, a method of properly framing a self portrait with a mobile phone is needed.

### SUMMARY

The invention includes a method to use the low resolution front camera to take a "reference picture" that can be easily framed by the user taking the self portrait. The camera is then turned around to face the user. The camera instructs the user to tilt or pan the camera lens of the higher resolution back camera until the image is framed similarly to the reference picture. When the back camera image is framed similarly to that of the front camera reference image, then the back camera captures the image. The result is a high resolution self portrait (selfie) that is framed similarly to that of the user-taken front camera reference picture. The higher resolution image is retained and the low resolution reference picture is discarded.

Additional features and advantages of the invention will be made apparent from the following detailed description of illustrative embodiments which proceeds with reference to the accompanying figures. It should be understood that the drawings are for purposes of illustrating the concepts of the disclosure and is not necessarily the only possible configuration for illustrating the disclosure.

### BRIEF DESCRIPTION OF THE DRAWINGS

The foregoing summary of the invention, as well as the following detailed description of illustrative embodiments, is better understood when read in conjunction with the accompanying drawings, which are included by way of example, and not by way of limitation with regard to the claimed invention.
Figures 1a, 1b, and 1c illustrates examples of using cameras to take self portraits;
Figure 2 illustrates an example flow diagram according to aspects of the invention; and
Figure 3 illustrates an example mobile device according to aspects of the invention.

### DETAILED DISCUSSION OF THE EMBODIMENTS

In the following description of various illustrative embodiments, reference is made to the accompanying drawings, which form a part thereof, and in which is shown, by way of illustration, various embodiments in which the invention may be practiced. It is to be understood that other example embodiments may be utilized and structural and functional modification may be made without departing from the scope of the present invention.

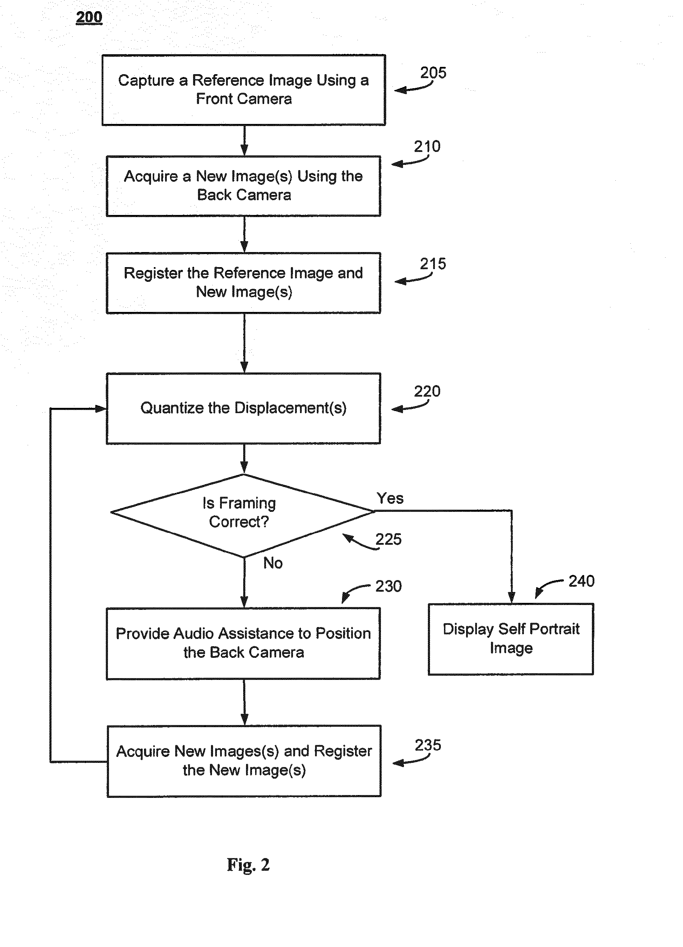

Figure 2 depicts an example method 200 practiced using a mobile device for the purpose of taking a high resolution self portrait (selfie) image. A mobile device can be any device having two cameras; a back camera or main camera and a front camera or user facing camera. The mobile device can be a tablet computer, a personal digital assistant, a mobile phone, a web-enabled e-mail device, and the like. The back camera of the mobile device has a high resolution compared to the front camera. One advantage of the current invention is the front camera of the mobile device, which can be a low resolution camera, can be used as a framing reference guide to assist the user in pointing the higher resolution back camera to properly frame a self portrait.

At step 205, a front camera of a mobile device is used to capture an image to be used as a reference image. This image is assumed to be well framed according to the desires and artistic skills of the mobile device user. For example, if the user wishes to have the head and shoulders of four people in the self portrait, then the user can easily frame the reference image using the low resolution front camera of the mobile device to accommodate the inclusion of all four people. In another example, if a background image is important to the user, then she can capture a well framed image using the low resolution camera to include the background image in an artistic setting of the self portrait image. The image taken in step 205 is used as a reference image because it is assumed to be well framed according to the desires of the user. Additionally, by using the front camera of the mobile device, the user has easy access to the equivalent of a shutter button to activate the capture of the reference image. This button may or may not be easily available if the user were to try to use the higher resolution back camera to take the self portrait image.

After capturing a reference image with a front camera, a new image may be acquired using the higher resolution back camera of the mobile device in step 210. Here, if a standard mobile device such as a mobile phone is used, then back camera use involves turning the mobile device around so the main, high resolution back camera is facing the user. This slightly awkward positioning of the back camera towards the user of the mobile device usually does not allow the user to see the main view screen on the user interface side of the mobile device. As depicted in Figure 1a, a self portrait taken with the high resolution back camera does not let a user frame the image of the self portrait. However, the method 200 of the present invention solves this framing problem. At step 210, the mobile device acquires an image of the user using the high resolution back camera. This image acquisition can be performed either manually or automatically.

If performed manually, the user makes an estimate of the proper position to point the back camera and triggers the shutter button. If performed automatically, the mobile device allows the user time to position the back camera properly and captures a new image. In one embodiment, the new image taken is one of a plurality of new images.

At step 215, image registration is performed on the reference image and the new image of step 210. Image registration is the process of transforming different sets of data into one coordinate system. Registration on the two images is useful to compare the data obtained from these different images.

Registration of an image may be made using at least two possible techniques can be used here. In one embodiment, a known similarity metric (L2 norm, correlation, cross-correlation, joint entropy, mutual information, normalized mutual information, etc.) can be used. A rough displacement is computed so as to maximize similarity. In other words, the two images are registered for comparison purposes. The new image, as well as the reference image, are preferably smoothed and subsampled to make the registration process faster and more robust.

In another embodiment, the equivalent of registration at step 215 is the use of keypoint detection and tracking. Here, image keypoints are detected on the reference image and the new image, and a tentative displacement is computed so as to maximize the similarity between a computed image descriptor. Many variants of an image descriptor are possible as is known by those of skill in the art.

In one variant of registration, saliency information, computed as a heat map predicting the visual gaze, can be used to register the images. That implies taking into account the foreground only, discarding the background that might change between pictures. That could be applied for instance in some cases to achieve a desired effect of a stationary person with a moving background. In this embodiment, the user becomes the framing reference image and the background changes as controlled by the user's location in time or space. In this manner, a picture could be taken of the same person or locale across days of a year. Alternately, this use can chronicle or self portrait a traveler where only the foreground of the image subject needs to be aligned.

Once image registration is performed at step 215, then the differences are obtained in step 220. In one embodiment, a regression of the displacement computed can be roughly performed as a pure global translation for instance. In a derivative scenario, a more complex motion can be estimated. In one embodiment, this displacement is quantized over 8 possible directions for instance.

Here, the displacement between the two images is quantized in order to compute a distance between the reference image and the new image. At step 225, the framing of the two images is compared. The difference between the two images is essentially a pointing error of the back camera resulting in an image framing error of the new image compared to the reference image. In other words, the image framing of a new image is compared to the image framing of the reference image. In one embodiment, this image framing comparison involves comparing the registration of the new image and the registration of the reference image. The difference in the registration of the two images is an image framing error. If the distance between the two images is less than an acceptable threshold, then the image framing is correct and the method 200 progresses to step 240 where the new image is displayed for the user as the well framed self portrait image. Essentially, the displayed image is an image acquired using the high resolution back camera having a framing registration closest to the reference image.

The threshold for new image registration acceptance will depend on the registration method that is used. Well known methods for registration include global similarity metric, keypoint extraction, matching, and the like. In one embodiment, a method to determine convergence is performed through variation of the matching criterion. For instance, between two iterations of the registration algorithm, if the matching criterion has changed less than a percentage, such as 5%, 2%, or 1%, then convergence is assumed. In another embodiment, a displacement difference may be calculated via a similarity metric and a corresponding decision threshold.

If at step 225, the displacement between the reference image and the new image is greater than a threshold, then another new image should be taken. A new image may also be taken of the displacement is equal to the threshold. Thus, if the framing of the new image is incorrect (greater than a threshold), then the method 200 progresses from step 225 to step 230. At step 230, the displacement between the reference image and the new image is translated into a direction with respect to the high resolution (back) camera lens field of view. That is, a desired direction of back camera lens pointing is determined so that a properly framed image may be taken. Then, this direction is used to provide an audio playback guiding the mobile device user to point the high resolution (back) camera in a direction to more closely match with the reference image. An audio or vocal indication is given to the user so as to move/rotate the mobile device and obtain a better framing. For instance, if the global translation is directed toward the upper part of the image, an indication will be given to rotate the mobile device so that it looks up.

The audio playback can be a previously prepared audio bite triggered via a look-up table based on the direction of the displacement. Other methods of triggering or generating an appropriate audio instruction may be used. Assuming the user points the back camera in a more appropriate direction to match the framing of the reference image, another new image is acquired at step 235.

In one embodiment, acquiring a new image at step 235 occurs automatically when the framing is close to the reference framing. In one embodiment, the timing for automatically capturing an image is linked to the computation time of the mobile device. In another embodiment, multiple images are taken automatically after the audio assistance is provided so that a number of images may be candidates for the desired properly framed final image. In any event, the newest acquired image taken a step 235 also undergoes a registration process so that they may be compared to the reference image for framing comparison.

The method progresses from step 235 to step 220 where the framing of the newest acquired image is compared to the reference image via a quantization of the displacement of the newest image against the reference image. From step 220 the framing is compared at step 225 and a final picture is displayed on the user view screen of the mobile device if the framing is within an acceptance threshold. Otherwise, steps 230, 235, 220 and 225 are repeated until the framing of the self portrait image from the high resolution back camera compares well to the framing of the low resolution image from the front camera used as the reference image. As a result, a single final picture may be presented as the well framed self portrait. The well framed self portrait image is retained and the other images may be discarded.

Other variations of the present invention are possible. For example, in one derivative scenario, when the reference picture is acquired with the front camera, a reference picture is also acquired with the back camera (thus looking at the opposite direction). This second reference picture can also be used to position efficiently the camera as described above, and makes more robust the process since more information is added as a result of the higher resolution reference image.

In another derivative scenario, the user acquired without any assistance a video, continuously shooting and moving freely the camera. In this instance, a global rotation can be preferably one movement that provides a multitude of video image frames from which to select an image closest to the reference image frame. Given this sequence of N frames, the mobile device system will then select the subset of n images that are the closest, in terms of geometrical similarity, to the reference image. All images whose similarity is below a given threshold can be added to the subset. Among this set of n images, the system will select the one with the highest quality, in terms of blur, sharpness, contrast, aesthetic, etc. The resulting selection will be the closest framed self portrait image.

In another derivative scenario, gyroscope information to can be used to control the device orientation. The gyroscope information of the reference image could be stored during the first reference image capture step. This would be an informed pose set-up. The stored gyroscope information could then be used to guide the blind capture step where the high resolution camera is used. The camera position in the 3D space determined by a 3D translation will then be set-up using the captured pictures as explained above.

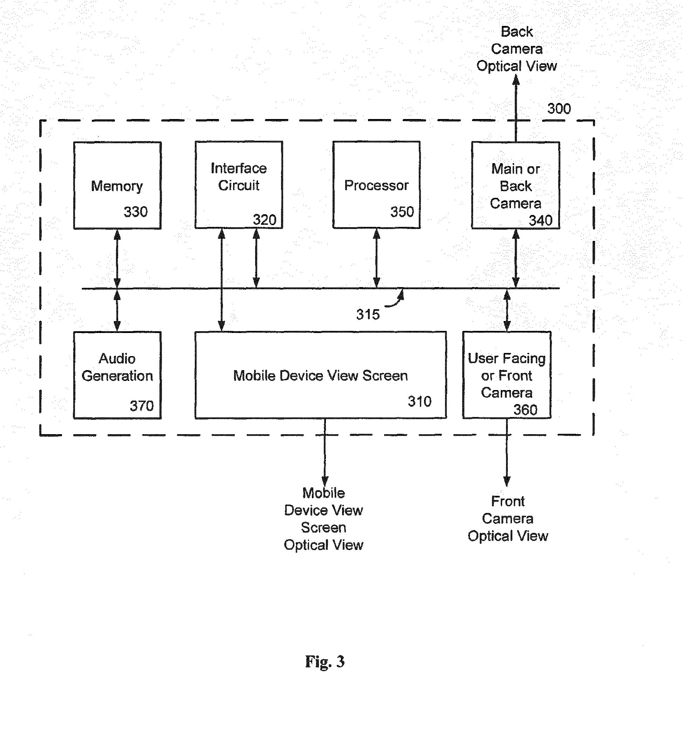

Figure 3 is a depiction of a mobile device 300 block diagram. As indicated above, the mobile device includes two cameras; a main or back camera 340 and the user facing front camera 360. An interface circuit 320 serves to couple a mobile device display 310, such as a touch screen display, to an internal connection to a processor 350 and memory 330. A graphics control interface may be included in interface circuit 320. If the mobile device is a smart phone, then cellular RF interface (not shown) may also be present.

The mobile device 300 of Figure 3 is depicted as having an internal bus 315 as is known in the art. Although Figure 3 depicts a bus implementation, other implementations are applicable and are well-known in the art. A processor 350 assists in controlling the various bus interfaces and resources for the mobile device 300. Those resources include a local memory 330 used for program and /or data storage, such as photographic images, and look up tables, and an audio generation module 370. The audio generation module may be used in conjunction with the processor 350 and memory 330 to produce audio instruction to a user as described above. Audio generation module 370 may include a D/A converter and speaker. Instructions for a program stored in memory 330 can function to implement the flow diagram of Figure 2.

The processor 350 performs control functions for the mobile device as well as providing the computation resources for generation of registration information on acquired images, displacement computations, framing accuracy determinations, audio instruction generation, and other functions to control the steps of Figure 2.

In one embodiment, features of the invention include a method of taking a self portrait image using a mobile device having a front camera and a back camera. Steps of the method include capturing a self portrait image using the front camera of the mobile device, wherein the self portrait image becomes a reference image. A new image is acquired using the back camera of the mobile device, the back camera having a higher resolution compared to the front camera. Image framing of the new image is compared to the reference image from the front camera. The back camera position is adjusted using instructions provided by the mobile device to correct an image framing error. A newest self portrait image is captured using the back camera and image framing of the newest self portrait image is compared to the image framing of the reference image. If the image framing of the newest self portrait image compared to the image framing of the reference image is greater than a threshold, then the back camera position is again adjusted using instructions provided by the mobile device to correct an image framing error. A newest image is then taken. This newest image framing is then compared to the image framing of the reference image. When the image framing comparison is less than a threshold, then the newest self portrait image is displayed.

In another embodiment, an apparatus for taking a self portrait image includes a front camera for capturing a self portrait image, wherein the self portrait image becomes a reference image. A back camera for acquiring a new image is also included, where the back camera has a higher resolution compared to the front camera. A processor is used for comparing image framing of the new image to image framing of the reference image. The processor provides instructions to adjust the back camera position to correct an image framing error. Memory of the apparatus is coupled to the processor for storing a newest self portrait image captured using the back camera. The processor compares image framing of the newest self portrait image to the image framing of the reference image. A display of the apparatus is used for displaying an image acquired using the high resolution back camera having a framing registration closest to the reference image.

Although specific architectures are shown for the implementation of a mobile device as shown in Figure 3, one of skill in the art will recognize that implementation options exist such as distributed functionality of components, consolidation of components, and use of internal busses or not. Such options are equivalent to the functionality and structure of the depicted and described arrangements.

The implementations described herein may be implemented in, for example, a method or process, an apparatus, or a combination of hardware and software. Even if only discussed in the context of a single form of implementation (for example, discussed only as a method), the implementation of features discussed may also be implemented in other forms. For example, implementation can be accomplished via a hardware apparatus, hardware and software apparatus. An apparatus may be implemented in, for example, appropriate hardware, software, and firmware. The methods may be implemented in, for example, an apparatus such as, for example, a processor, which refers to any processing device, including, for example, a computer, a microprocessor, an integrated circuit, or a programmable logic device.

Additionally, the methods may be implemented by instructions being performed by a processor, and such instructions may be stored on a processor or computer-readable media such as, for example, an integrated circuit, a software carrier or other storage device such as, for example, a hard disk, a compact diskette ("CD" or "DVD"), a random access memory ("RAM"), a read-only memory ("ROM") or any other magnetic, optical, or solid state media. The instructions may form an application program tangibly embodied on a computer-readable medium such as any of the media listed above or known to those of skill in the art.

## Claims

1. A method of taking a self portrait image using a mobile device having a front camera and a back camera, the method **characterized by**:
a. capturing (205) a self portrait image using the front camera of the mobile device, wherein the self portrait image becomes a reference image;
b. acquiring (210) a new image using the back camera of the mobile device, the back camera having a higher resolution compared to the front camera;
c. comparing (225) image framing of the new image to image framing of the reference image;
d. adjusting (230) the back camera position using instructions provided by the mobile device to correct an image framing error;
e. capturing (235) a newest self portrait image using the back camera and comparing image framing of the newest self portrait image to the image framing of the reference image;
f. repeating steps d and e when the image framing of the newest self portrait image compared to the image framing of the reference image is greater than a threshold; and
g. displaying (240) the newest self portrait image when the image framing comparison is less than a threshold.

2. The method of claim 1, wherein capturing a self portrait image using the front camera of the mobile device comprises capturing a well-framed image under user control.

3. The method of claim 1, wherein acquiring a new image using the back camera of the mobile device comprises capturing the new image either manually or automatically.

4. The method of claim 3, wherein, the new image is one of a plurality of new images.

5. The method of claim 1, wherein comparing image framing of the back camera to that of the reference image from the front camera comprises:
registering the reference image and the new image; and
quantizing a displacement between the images.

6. The method of claim 1, wherein adjusting the back camera position comprises a user positioning the back camera of the mobile device using audio instructions provided by the mobile device to minimize the image framing error.

7. The method of claim 1, wherein capturing the newest self portrait image comprises capturing the newest self portrait image either manually or automatically.

8. The method of claim 7, wherein, the newest self portrait image is one of a plurality of images captured in step e.

9. The method of claim 1, wherein displaying the newest self portrait image when the image framing comparison is less than the threshold comprises displaying the newest self portrait image as a completed self portrait image having a desired framing.

10. An apparatus for taking a self portrait image, the apparatus **characterized by**:
a front camera (360) for capturing a self portrait image, wherein the self portrait image becomes a reference image;
a back camera (340) for acquiring a new image, the back camera having a higher resolution compared to the front camera;
a processor (350) for comparing image framing of the new image to image framing of the reference image, the processor providing instructions to adjust the back camera position to correct an image framing error;
memory (330), coupled to the processor for storing a newest self portrait image captured using the back camera, the processor comparing image framing of the newest self portrait image to the image framing of the reference image;
a display (310) of the apparatus for displaying an image acquired using the high resolution back camera having a framing registration closest to the reference image.

11. The apparatus of claim 10, wherein the front camera captures the self portrait image having a desired framing under control of a user.

12. The apparatus of claim 10, wherein the back camera acquires the new image under control of the processor.

13. The apparatus of claim 10, wherein the processor compares image framing by registering the reference image and the new image, and quantizing a displacement between the images.

14. The apparatus of claim 10, wherein the processor provides audio instructions to adjust the back camera position to minimize the image framing error.

15. The apparatus of claim 10, wherein the apparatus is a mobile device.
